# EUROPÄISCHE PATENTSCHRIFT

(11) **EP 4 144 003 B1**
(45) Veröffentlichungstag und Bekanntmachung des Hinweises auf die Patenterteilung: **04.10.2023**
(21) Anmeldenummer: 21762720.7
(22) Anmeldetag: 20.08.2021
(51) Int. Cl.: H04L 67/12

(54) **VERFAHREN ZUM ERZEUGEN EINER SOFTWAREKOMPONENTE FÜR EINE ELEKTRONISCHE RECHENEINRICHTUNG EINES KRAFTFAHRZEUGS, COMPUTERPROGRAMMPRODUKT, COMPUTERLESBARES SPEICHERMEDIUM SOWIE KRAFTFAHRZEUGEXTERNES AKTUALISIERUNGSSYSTEM**
METHOD FOR PRODUCING A SOFTWARE COMPONENT FOR AN ELECTRONIC COMPUTING DEVICE OF A MOTOR VEHICLE, COMPUTER PROGRAM PRODUCT, COMPUTER-READABLE STORAGE MEDIUM AND MOTOR-VEHICLE-EXTERNAL UPDATE SYSTEM
PROCÉDÉ DE FABRICATION D'UN COMPOSANT LOGICIEL POUR UN DISPOSITIF INFORMATIQUE ÉLECTRONIQUE D'UN VÉHICULE AUTOMOBILE, PRODUIT DE PROGRAMME INFORMATIQUE, SUPPORT DE STOCKAGE LISIBLE PAR ORDINATEUR ET SYSTÈME DE MISE À JOUR EXTERNE DE VÉHICULE AUTOMOBILE

(30) Priorität: 02.10.2020 DE 102020006031
(43) Veröffentlichungstag der Anmeldung: 08.03.2023
(73) Patentinhaber: Mercedes-Benz Group AG, 70372 Stuttgart (DE)
(72) Erfinder: SEILER, Christian, 70736 Fellbach-Schmiden (DE)
(74) Vertreter: Novagraaf Group
(86) Internationale Anmeldenummer: PCT/EP2021/073104
(87) Internationale Veröffentlichungsnummer: WO 2022/069109

(56) Entgegenhaltungen:
- Guissouma Houssem ET AL: "A Generic System for Automotive Software Over the Air (SOTA) Updates Allowing Efficient Variant and Release Management : Part I" In: "Genetic and Evolutionary Computing : Proceedings of the Twelfth International Conference on Genetic and Evolutionary Computing, December 14-17, 2019; Changzhou, Jiangsu, China", 1. Januar 2019 (2019-01-01), Springer, Berlin, XP055864945, ISSN: 2194-5357 Bd. 852, Seiten 78-89, DOI: 10.1007/978-3-319-99981-4_8, Sections 5.1., 5.2; Abbildungen 4, 5

## Beschreibung

Die Erfindung betrifft ein Verfahren zum Erzeugen einer Softwarekomponente für eine elektronische Recheneinrichtung eines Kraftfahrzeugs mittels eines kraftfahrzeugexternen Aktualisierungssystems. Ferner betrifft die Erfindung ein Computerprogrammprodukt, ein computerlesbares Speichermedium sowie ein kraftfahrzeugexternes Aktualisierungssystem.

Aus dem Stand der Technik ist bereits bekannt, dass aktuelle Remote-Software-Aktualisierungsprozesse einen zweifachen Ansatz zur Aktualisierung eines Kraftfahrzeugs über On-Board-Aktualisierungsverwaltungsinstanzen beinhalten, die andere elektronische Recheneinrichtungen, welche auch als Steuergeräte bezeichnet werden können, über On-Board-Kommunikationsprotokolle aktualisieren können. Während des On-Board-Update-Mechanismus gibt es derzeit keine Möglichkeit, die Software-Konfigurationsdatensätze von den Zielsteuergeräten zu sammeln, so dass diese Daten nicht an eine kraftfahrzeugexterne elektronische Recheneinrichtung, welche auch als Backend-Server bezeichnet werden kann, für die Fernaktualisierung gemeldet werden können. Es gibt auch keinen Mechanismus zur Überprüfung der Abhängigkeiten von Eingabedaten und somit keine Lösung zur Erkennung von Änderungen an Fahrzeugausrüstungsoptionslisten, einer technischen Merkmalszusammensetzung sowie eines Konfigurationsregelwerks.

Die DE 2018 001 347 A1 betrifft ein System zum Übertragen zumindest eines Aktualisierungspakets für zumindest ein Steuergerät eines Kraftfahrzeugs, mit einer kraftfahrzeugexternen Speichereinrichtung, welche zum Abspeichern des Aktualisierungspakets ausgebildet ist, mit einer Kommunikationseinrichtung, welche zum Übertragen des Aktualisierungspakets von der kraftfahrzeugexternen Speichereinrichtung drahtlos an zumindest eine Übertragungseinrichtung des Systems ausgebildet ist, welche einen Übertragungsvorgang des Aktualisierungspakets für das zumindest eine Steuergerät leitet und zum Installieren des Aktualisierungspakets auf dem zumindest einen Steuergerät ausgebildet ist, wobei die zumindest eine Übertragungseinrichtung kraftfahrzeugintern angeordnet ist.

Die DE 10 2016 210 674 A1 beschreibt ein Verfahren für die weite Verbreitung von Software-Updates von Fahrzeugkomponenten, die einen Flash-Speicher umfassen, in Echtzeit. Das Verfahren umfasst: Bereitstellen eines Client-Servers zum Einleiten der Software-Updates; Bereitstellen eines Vermittlungsservers, der in Funktion mit dem Client-Server kommuniziert; Bereitstellen eines verteilten Netzwerkes, das eine Vielzahl von Kommunikationsservern umfasst, wobei jeder der Kommunikationsserver in Funktion mit einer Vorrichtung in einer Vielzahl von entsprechenden Fahrzeugen kommunizieren kann; Ansteuern der einzelnen Vorrichtungen zur Kommunikation über ein drahtloses Netzwerk mit einem aus der Vielzahl von Kommunikationsservern, um Software-Updates zu empfangen und auf elektronische Steuereinheiten (ECUs) in dem entsprechenden Fahrzeug anzuwenden; Ansteuern der einzelnen Vorrichtungen zum Erzeugen von Status-Updates und zum Kommunizieren der Status-Updates an einen Kommunikationsserver über das drahtlose Netzwerk; und Ansteuern der einzelnen Kommunikationsserver zum Erzeugen eines Datenstroms, der die Datennachrichten von der Vielzahl von entsprechenden Fahrzeugen umfasst, und zum Senden des Datenstroms an den Vermittlungsserver.

In "A Generic System for Automotive Software Over the Air (SOTA) Updates Allowing Efficient Variant and Release Management" von Guissouma Houssem et al, veröffentlicht in "Genetic and Evolutionary Computing: Proceedings of the Twelfth International Conference on Genetic and Evolutionary Computing, December 14-17, 2019; Changzhou, Jiangsu, China", 1. Januar 2019, Springer, Berlin, XP055864945, ISSN: 2194-5357, Bd. 852, Seiten 78-89, wird ein generisches Software Over the Air (SOTA)-Update-System zum Aktualisieren von Software-Komponenten in Fahrzeugen offenbart. Dieses System ist zur Verteilung und zur Versionsverwaltung der Aktualisierungen ausgelegt.

Aufgabe der vorliegenden Erfindung ist es, ein Verfahren, ein Computerprogrammprodukt ein computerlesbares Speichermedium sowie ein kraftfahrzeugexternes Aktualisierungssystem zu schaffen, mittels welchen eine verbesserte Fernverwaltung von Softwarekonfigurationen realisiert werden kann.

Diese Aufgabe wird durch ein Verfahren, ein Computerprogrammprodukt, ein computerlesbares Speichermedium sowie ein kraftfahrzeugexternes Aktualisierungssystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Erzeugen einer Softwarekomponente für eine elektronische Recheneinrichtung eines Kraftfahrzeugs mittels eines kraftfahrzeugexternes Aktualisierungssystems, bei welchem die Softwarekomponente in Abhängigkeit von einer Konfigurationsschreibsequenz, von einer Konfigurationslesesequenz und von einem Konfigurationsregelwerk mittels einer kraftfahrzeugexternen elektronischen Recheneinrichtung des Aktualisierungssystems erzeugt wird.

Es ist vorgesehen, dass in Abhängigkeit von einem Konfigurationsdatensatz das Konfigurationsregelwerk erzeugt wird, wobei der Konfigurationsdatensatz in Abhängigkeit von einer Fahrzeugausrüstungsoptionsliste und von einer technischen Merkmalszusammensetzung für das Kraftfahrzeug erzeugt wird.

Dadurch ist es insbesondere ermöglicht, dass eine umfassende Lösung zur Fernverwaltung von Softwarekonfigurationen, insbesondere zum Erzeugen einer Softwarekomponente, beispielsweise für eine Flotte von mehreren Kraftfahrzeugen aufgrund von Änderung von Artefakten realisiert werden kann, von denen die Softwarekonfigurationen abhängig sind.

Vorliegend ist von einer elektronischen Recheneinrichtung eines Kraftfahrzeugs gesprochen. Es ist selbstverständlich, dass das Verfahren auch auf anderen elektronischen Recheneinrichtungen von anderen Entitäten anwendbar ist. Das erfindungsgemäße Verfahren ist somit nicht auf Kraftfahrzeuge beschränkt. Insbesondere ist somit ein Konzept zur Trennung von Konfigurationsdaten von der Adressierung von der Konfigurationsschreibsequenz (Configuration Write Sequence - CWS) und von der Adressierung von der Konfigurationslesesequenz (Configuration Read Sequence - CRS) um enthaltene Informationen durch Hinzufügen von Verweisen auf die Informationsquellen, von denen die Konfigurationsdaten abgeleitet werden und somit davon abhängig sind, erweitert.

Bei der Fahrzeugausrüstungsoptionsliste (Vehicle Equipment Option List - VEOL) handelt es sich insbesondere um eine Liste, welche vom Kundenauftrag abgeleitet ist. Die aktivierten Funktionen werden damit repräsentiert, welche unabhängig davon sind, ob die Fahrzeugausrüstungsoptionsliste auf installierte oder nicht installierte Hardware-Ausrüstung oder auf aktivierte oder nicht aktivierte Software angewendet wird.

Bei der technischen Merkmalszusammensetzung handelt es sich insbesondere um einen Satz an technischen Merkmalen (Technical Feature Set - TFS) von Bauteilen, auf die sich die Softwarekonfiguration bezieht.

Das Konfigurationsregelwerk (Configuration Rule Set - CRUS) kann beispielsweise abhängig von der Softwarekomponente selbst sein. Dieser Regelsatz baut auf der Fahrzeugausrüstungsoptionsliste und der technischen Merkmalszusammensetzung auf und definiert die konkreten Konfigurationsdaten für jede einzelne Softwarefunktion. Dieser Regelsatz ist abhängig von einer konkreten Fahrzeuginstanz. Die Abhängigkeiten der Fahrzeugausrüstungsoptionsliste, der technischen Merkmalszusammensetzung und des Konfigurationsregelsatzes sind als Metadaten innerhalb des Konfigurationsdatensatzes selbst dokumentiert. Dies ermöglicht die Erkennung und sofortige Reaktion auf Änderungen oder sogar geplante Änderungen an der Fahrzeugausrüstungsoptionsliste, der technischen Merkmalszusammensetzung und an dem Konfigurationsregelwerk.

Gemäß einer vorteilhaften Ausgestaltungsform wird die Fahrzeugausrüstungsoptionsliste in Abhängigkeit von einem Kundenauftrag für die Konfiguration mittels des kraftfahrzeugexternen Aktualisierungssystems erzeugt. Bei der Fahrzeugausrüstungsoptionsliste handelt es sich somit um eine Liste, welche beschreibt, was der Kunde bei einer Herstellung des Kraftfahrzeugs eingebaut hat und welche Software damit in Verbindung steht. Insbesondere werden damit die aktivierten Funktionen repräsentiert, welche aus dem Kundenauftrag abgeleitet sind. Diese Funktionen sind insbesondere unabhängig davon, ob die Fahrzeugausrüstungsoptionsliste auf installierte oder nicht installierte Hardware-Ausrüstung und/oder auf aktivierte oder nicht aktivierte Software angewendet wird. Dadurch kann eine verbesserte Erzeugung der Softwarekomponente realisiert werden.

Weiterhin vorteilhaft ist, wenn die technische Merkmalszusammensetzung in Abhängigkeit von im Kraftfahrzeug verbauter Bauteile mittels des kraftfahrzeugexternen Aktualisierungssystems erzeugt wird. Insbesondere ist somit die technische Merkmalszusammensetzung abhängig von sogenannten Hardwarekomponenten, welche im Kraftfahrzeug verbaut sind. Insbesondere können sich dabei optional diese technischen Merkmale auf Softwarekonfigurationen beziehen. Somit ist eine verbesserte Erzeugung der Softwarekomponente realisiert.

Ferner hat es sich als vorteilhaft erwiesen, wenn der Konfigurationsdatensatz in Abhängigkeit von einer Identifizierung der elektronischen Recheneinrichtung mittels einer Identifizierungseinrichtung des kraftfahrzeugexternen Aktualisierungssystems für die elektronische Recheneinrichtung erzeugt wird. Insbesondere handelt es sich somit um eine Identifizierung, beispielsweise einer aktuellen Version der elektronischen Recheneinrichtung beziehungsweise eine Software der elektronischen Recheneinrichtung. Somit kann ein Versionsstand des Diagnosedatenbestands für die Softwarekomponente realisiert werden. Dadurch ist eine verbesserte Erzeugung der Softwarekomponente realisiert.

Ferner hat es sich als vorteilhaft erwiesen, wenn das Konfigurationsregelwerk in Abhängigkeit von der Fahrzeugausrüstungsoptionsliste und in Abhängigkeit von der technischen Merkmalszusammensetzung erzeugt wird. Mit anderen Worten ist vorgesehen, dass der Konfigurationsdienst die Fahrzeugausrüstungsoptionsliste sowie die Informationen aus der technischen Merkmalszusammensetzung berücksichtigt wird. Ferner können auch das Konfigurationsregelwerk bei der Generierung des Konfigurationsdatensatzes berücksichtigt werden, der sich selbst wiederum auf die Konfigurationsschreibsequenz und auf die Konfigurationslesesequenz und indirekt auf beispielsweise die Identifizierungseinrichtung bezieht, um diese Daten mit einem entsprechenden Zielsteuergerät im Kraftfahrzeug auszutauschen.

In einer weiteren vorteilhaften Ausgestaltungsform wird bei der Erzeugung der Softwarekomponente eine Veränderung in der technischen Merkmalszusammensetzung im Kraftfahrzeug berücksichtigt. Für den Fall, dass sich beispielsweise ein technisches Merkmal innerhalb des Kraftfahrzeugs ändert, wird der jeweilige Zustand der technischen Merkmalszusammensetzung mit einem eindeutigen Identifizierer versehen, damit der jeweilige Stand korrekt differenziert werden kann, auf den sich das Konfigurationsregelwerk bezieht. Auch in diesem Fall kann eine entsprechende Änderung zu einem Software-Update mit Konfigurationsänderungen führen.

Gemäß einer weiteren vorteilhaften Ausgestaltungsform wird bei der Erzeugung der Softwarekomponente eine Veränderung in der Fahrzeugausrüstungsoptionsliste im Kraftfahrzeug berücksichtigt. Sollte beispielsweise während eines Lebenszyklus des Kraftfahrzeugs oder der Identität sich beispielsweise auch die Fahrzeugausrüstungsoptionsliste ändern, so kann dies entsprechend berücksichtigt werden. Ein möglicher Anwendungsfall ist der zusätzliche Einbau von beispielsweise einer Anhängerkupplung in einer Werkstatt für das Kraftfahrzeug. Daher könnten ein Software-Update und eine Konfigurationsänderung erforderlich sein, was durch den Wechsel der Fahrzeugausrüstungsoptionsliste ausgelöst wird. In diesem Anwendungsfall würde die Änderung der Fahrzeugausrüstungsoptionsliste direkt die neuen Konfigurationsdatensätze aller betroffenen elektronischen Recheneinrichtungen des entsprechenden Kraftfahrzeugs erzeugen, die von dieser Änderung abhängig sind. Somit ist eine Konfigurationsaktualisierung im Anschluss direkt planbar.

Alternativ oder ergänzend kann auch eine Änderung im Konfigurationsregelwerk bei der Erzeugung der Softwarekomponente berücksichtigt werden. Hierbei können neue Funktionen neue Konfigurationsanforderungen mit sich bringen und führen so zu neuen Einträgen in der CRUS. Mit der Verfügbarkeit der aktuellen Konfigurationsdatensätze aller Softwarekomponenten aller Steuergeräte der gesamten Flotte auf dem Backend lassen sich unterschiedliche Anwendungsfälle realisieren.

Ein weiterer Aspekt der Erfindung betrifft ein Computerprogrammprodukt mit Programmmitteln, welche in einem computerlesbaren Speichermedium einer elektronischen Recheneinrichtung abspeicherbar sind,und Befehle umfasst, wenn das Computerprogrammprodukt mittels der elektronischen Recheneinrichtung abgearbeitet wird, ein Verfahren nach dem vorhergehenden Aspekt durchzuführen.

Ein nochmals weiterer Aspekt der Erfindung betrifft ein computerlesbares Speichermedium mit einem Computerprogrammprodukt nach dem vorhergehenden Aspekt.

Ein nochmals weiterer Aspekt der Erfindung betrifft ein kraftfahrzeugexternes Aktualisierungssystem mit zumindest einer kraftfahrzeugexternen elektronischen Recheneinrichtung, wobei das kraftfahrzeugexterne Aktualisierungssystem zum Durchführen eines Verfahrens nach dem vorhergehenden Aspekt ausgebildet ist. Insbesondere wird das Verfahren mittels des kraftfahrzeugexternen Aktualisierungssystems durchgeführt.

Vorteilhafte Ausgestaltungsformen des Verfahrens sind als vorteilhafte Ausgestaltungsformen des Computerprogrammprodukts, des computerlesbaren Speichermediums sowie des kraftfahrzeugexternen Aktualisierungssystems anzusehen. Das kraftfahrzeugexterne Aktualisierungssystem weist dazu gegenständliche Merkmale auf, welche eine Durchführung eines Verfahrens und eine vorteilhafte Ausgestaltungsform davon ermöglichen.

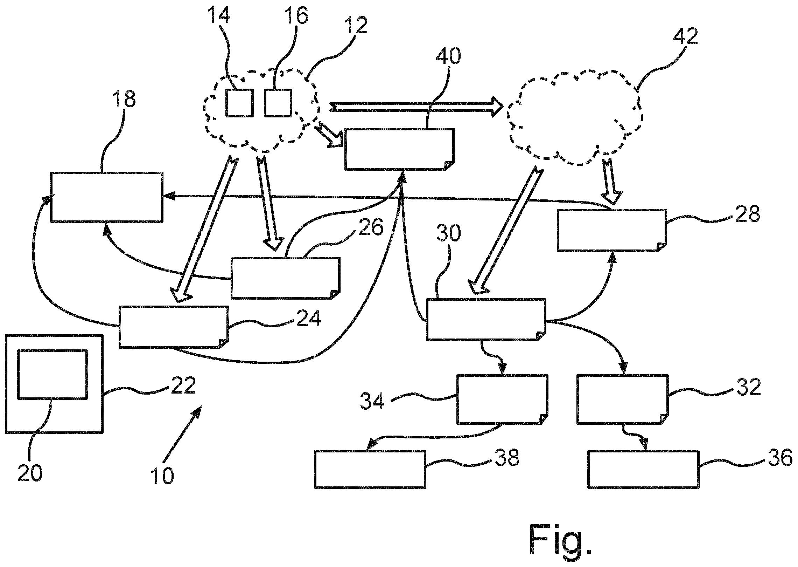

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigt die einzige Figur ein schematisches Blockschaltbild einer Ausführungsform eines kraftfahrzeugexternen Aktualisierungssystems.

In der Figur sind gleiche oder funktionsgleiche Elemente mit den gleichen Bezugszeichen versehen.

Die Figur zeigt in einem schematischen Blockschaltbild eine Ausführungsform eines kraftfahrzeugexternen Aktualisierungssystems 10. Das kraftfahrzeugexterne Aktualisierungssystem 10 weist zumindest eine kraftfahrzeugexterne elektronische Recheneinrichtung 12 auf. Die kraftfahrzeugexterne elektronische Recheneinrichtung 12 kann beispielsweise als Backend-Server ausgebildet sein. Insbesondere kann die kraftfahrzeugexterne elektronische Recheneinrichtung 12 als Diagnosedatenwolke ausgebildet sein.

Die kraftfahrzeugexterne elektronische Recheneinrichtung 12 kann beispielsweise ein Computerprogrammprodukt 14 umfassen, welches Programmmittel aufweist, welche in einem computerlesbaren Speichermedium 16 der elektronischen Recheneinrichtung 12 abspeicherbar sind, und Befehle umfasst, wenn das Computerprogrammprodukt mittels der elektronischen Recheneinrichtung 12 abgearbeitet wird, ein erfindungsgemäßes Verfahren durchzuführen. Das computerlesbare Speichermedium 16 wiederum kann das Computerprogrammprodukt 14 aufweisen.

Die Figur zeigt insbesondere ein Verfahren zum Erzeugen einer Softwarekomponente 18 für eine elektronische Recheneinrichtung 20 eines rein schematisch dargestellten Kraftfahrzeugs 22 mittels des kraftfahrzeugexternen Aktualisierungssystems 10. Die Softwarekomponente 18 wird in Abhängigkeit von einer Konfigurationsschreibsequenz 24, von einer Konfigurationslesesequenz 26 und von einem Konfigurationsregelwerk 28 mittels der kraftfahrzeugexternen elektronischen Recheneinrichtung 12 des Aktualisierungssystems 10 erzeugt.

Es ist dabei vorgesehen, dass in Abhängigkeit von einem Konfigurationsdatensatz 30 das Konfigurationsregelwerk 28 erzeugt wird, wobei der Konfigurationsdatensatz 30 in Abhängigkeit von einer Fahrzeugausrüstungsoptionsliste 32 und von einer technischen Merkmalszusammensetzung 34 für das Kraftfahrzeug 22 erzeugt wird.

Ferner kann vorgesehen sein, dass die Fahrzeugausrüstungsoptionsliste 32 in Abhängigkeit von einem Kundenauftrag 36 für die Konfiguration mittels des kraftfahrzeugexternen Aktualisierungssystems 10 erzeugt. Des Weiteren kann vorgesehen sein, dass die technische Merkmalszusammensetzung 34 in Abhängigkeit von im Kraftfahrzeug 22 verbauter Bauteile 38 mittels des kraftfahrzeugexternen Aktualisierungssystems 10 erzeugt wird.

Des Weiteren zeigt die Figur, dass der Konfigurationsdatensatz 30 in Abhängigkeit von einer Identifizierung der elektronischen Recheneinrichtung 20 mittels einer Identifizierungseinrichtung 40 des kraftfahrzeugexterne Aktualisierungssystems 10 für die elektronische Recheneinrichtung 20 erzeugt wird.

Es kann ferner insbesondere vorgesehen sein, dass das Konfigurationsregelwerk 28 in Abhängigkeit von der Fahrzeugausrüstungsoptionsliste 32 und in Abhängigkeit von der technischen Merkmalszusammensetzung 34 erzeugt wird. Ferner kann vorgesehen sein, dass bei der Softwarekomponente 18 eine Veränderung in der technischen Merkmalszusammensetzung 34 im Kraftfahrzeug 22 berücksichtigt wird. Des Weiteren kann bei der Erzeugung der Softwarekomponente 18 eine Veränderung in der Fahrzeugausrüstungsoptionsliste 32 im Kraftfahrzeug 22 berücksichtigt werden.

Die Figur zeigt insbesondere, dass die Konfigurationslesesequenz 26 und die Konfigurationsschreibsequenz 24 aus dem Zustand der Softwarekomponente 18 abgeleitet und von der kraftfahrzeugexternen elektronischen Recheneinrichtung 12, insbesondere von der Diagnosedatencloud, generiert wird. Diese beziehen sich auf einen Versionsstand des Diagnosedatenbestands für die Softwarekomponente 18, der insbesondere durch die Identifizierungseinrichtung 40 identifiziert ist. Die Softwarekomponente 18 wird in der elektronischen Recheneinrichtung 20 eingesetzt, die in Entitäten enthalten sind, die durch Remote-Update-Dienste aktualisiert werden können. Bei den Entitäten, insbesondere vorliegend bei dem Kraftfahrzeug 22, kann es sich um Straßenfahrzeuge, aber auch Gebäude, Flugzeuge, Drohnen, Schiffe, Roboter, Maschinen oder dergleichen handeln oder jede Art von Cyber-physikalischen Systemen, die programmierbare elektronische Steuereinheiten, also elektronische Recheneinrichtungen 20, enthalten, die miteinander verbunden sind. In diesem Ausführungsbeispiel ist insbesondere das Kraftfahrzeug 22 die Referenz für die Umsetzung des erfindungsgemäßen Konzepts.

Das Konfigurationsregelwerk 28 bezieht sich auf die Softwarekomponente 18 und beschreibt die Regeln, unter welchen Umständen welche konkreten Werte aus dem Diagnosedatenbestand in den Konfigurationsdatensatz 30 geschrieben werden sollen. Ein Konfigurationsdienst 42 verwendet die Fahrzeugausrüstungsoptionsliste 32, die Informationen aus der technischen Merkmalszusammensetzung 34, der sich selbst wiederum auf die Konfigurationslesesequenz 26 und die Konfigurationsschreibsequenz 24 indirekt über die Identifizierungseinrichtung 40 bezieht, um diese Daten mit dem Zielsteuergerät im Kraftfahrzeug 22, also mit der elektronischen Recheneinrichtung 20, auszutauschen. Die Fahrzeugausrüstungsoptionsliste 32 selbst leitet sich vom Kundenauftrag 36 ab und beinhaltet die Codes und Sonderausstattungscodes, die aus Kunden- und Produktionssicht relevant für das Kraftfahrzeug 22 sind. Die technische Merkmalszusammensetzung 34 beschreibt technische Merkmale von Bauteilen 38 beziehungsweise Hardwarekomponenten, die relevant für die Softwarekomponente 18, respektive für die darin enthaltenen Softwarefunktionen sind. Sobald alle diese Artefakte mit Querverweisen versehen und unter Versionskontrolle sind, werden die Abhängigkeiten erzeugt, und die Datensätze beziehungsweise das gesamte System können für den kompletten Lebenszyklus diese Artefakte nutzen.

Die Figur wird nun exemplarisch am Beispiel einer Starterbatterie erläutert. Die Softwarekomponente 18 beziehungsweise Softwarefunktion kann beispielsweise ein Batterielademanagement sein, welches eine Diagnoseschnittstelle aufweist, deren Schnittstellenbeschreibung in der kraftfahrzeugexternen elektronischen Recheneinrichtung 12 vorgehalten wird und in einer speziellen Version für dieses Beispiel relevant ist, welches innerhalb der Identifizierungseinrichtung 40 identifiziert wird. Mit dem Konfigurationsregelwerk 28 kann beispielsweise die Kapazität der Starterbatterie in Amperestunden beschrieben werden, wobei dies beispielsweise die Werte 60, 70 und 95 Amperestunden umfasst. Dem Konfigurationsdienst 42 sind die Struktur und die möglichen Werte bekannt. Die hier vorliegende Batterie, welche insbesondere ein Bauteil 38 beschreibt, mit der Teilenummer 1 hat beispielsweise die technische Merkmalszusammensetzung 34 mit einem Kapazitätswert von 95 Amperestunden. Im vorliegenden Kraftfahrzeug 22 in diesem Beispiel ist genau dieser Batterietyp verbaut. Dies ist über eine entsprechende Teilenummer dokumentiert und im Prozess bekannt. Des Weiteren wurde das vorliegende Kraftfahrzeug 22 beispielsweise im Kundenauftrag 36 für den deutschen Markt bestellt. Zudem sind die Optionen "Motor mit hoher Leistung" und "Außenfarbe Blau" im Kundenauftrag 36 enthalten. Alle drei Informationen sind als Code A, B und C in der Fahrzeugausrüstungsoptionsliste 32 hinterlegt.

Der Konfigurationsdienst 42 hat nun die Aufgabe, das Konfigurationsregelwerk 28 für den entsprechenden Service auszuwerten. In diesem logischen Ausdruck werden die möglichen Eingabeparameter aus den technischen Merkmalszusammensetzungen 34 und der Fahrzeugausrüstungsoptionsliste 32 logisch verknüpft. In diesem Beispiel könnte die Regel lauten: "Wenn das technische Merkmal für das vorliegende Bauteil dem Wert 95 Amperestunden entspricht, dann soll der Wert auf "95" gesetzt werden". Dieser Wert innerhalb des Konfigurationsregelwerks 28 für den Parameter wird über die Referenz zur Variante der elektronischen Recheneinrichtung 20 indirekt mit der Konfigurationslesesequenz 26 und der Konfigurationsschreibsequenz 24 in Bezug gebracht und somit der Softwarekomponente 18 übergeben.

Es kann beispielsweise vorkommen, dass während des Lebenszyklus der Softwarekomponente 18 sich das entsprechende Konfigurationsregelwerk 28 entwickelt. Neue Funktionen bringen neue Konfigurationsanforderungen mit sich und führen so zu neuen Einträgen in dem Konfigurationsregelwerk 28. Mit der Verfügbarkeit der aktuellen Konfigurationsdatensätze 30 aller Softwarekomponenten 18 aller elektronischen Recheneinrichtungen 20 der gesamten Flotte auf der kraftfahrzeugexternen elektronischen Recheneinrichtung 12 lassen sich beispielsweise folgende Anwendungsfälle realisieren.

Ein erster Anwendungsfall wäre beispielsweise eine "Was-wäre-wenn"-Analyse. Hierbei kann überprüft werden, wie sich Änderungen an dem Konfigurationsregelwerk 28 auf die Konfigurationsdaten 30 der Flotte auswirken. Ferner kann überprüft werden, wie viele Einheiten, beispielsweise Kraftfahrzeuge 22, betroffen sind. Des Weiteren kann überprüft werden, wie viele erreichbar sind und entsprechend aktualisiert werden müssten.

Ferner kann, wenn Änderungen vorgenommen werden, der genaue Satz von Entitäten identifiziert werden, die von der Änderung betroffen sind, und die Kampagnen können so zugeschnitten werden, dass nur diese Entitäten aktualisiert werden.

Wenn, als weiterer Fall, Änderungen des Konfigurationsregelwerks 28 rückgängig gemacht werden müssen, so kann die vorherige Version der Konfigurationsdatensätze 30 weiterhin verfügbar sein, da sie unter Versionskontrolle stehen und auf die von der Rücknahme betroffenen Entitäten verteilt werden können.

Sollte während des Lebenszyklus des Kraftfahrzeugs 22 oder der Entität sich die entsprechende Fahrzeugausrüstungsoptionsliste 32 ändern, was beispielsweise durch einen zusätzlichen Einbau einer Anhängerkupplung realisiert werden kann, so können ein Software-Update und Konfigurationsänderung erforderlich sein. Dies wird durch den Wechsel der Fahrzeugausrüstungsoptionsliste 32 ausgelöst. In diesem Anwendungsfall wird die Änderung der Fahrzeugausrüstungsoptionsliste 32 direkt in den neuen Konfigurationsdatensatz 30 aller betroffenen elektronischen Recheneinrichtungen 20 des entsprechenden Kraftfahrzeugs 22 erzeugt, die von dieser Änderung abhängig sind. Somit ist eine Konfigurationsaktualisierung im Anschluss direkt planbar.

Sollte beispielsweise eine Änderung der technischen Merkmalszusammensetzung für das Kraftfahrzeug 22 notwendig sein, so wird der jeweilige Zustand der technischen Merkmalszusammensetzung 34 mit einem eindeutigen Identifyer versehen, damit der jeweilige Stand korrekt identifiziert werden kann, auf den sich das Konfigurationsregelwerk 28 bezieht. Auch in diesem Fall kann eine solche Änderung zu einem Software-Update mit Konfigurationsänderung führen.

## Patentansprüche

1. Verfahren zum Erzeugen einer Softwarekomponente (18) für eine elektronische Recheneinrichtung (20) eines Kraftfahrzeugs (22) mittels eines kraftfahrzeugexternen Aktualisierungssystems (10), bei welchem die Softwarekomponente (18) in Abhängigkeit von einer Konfigurationsschreibsequenz (24), von einer Konfigurationslesesequenz (26) und von einem Konfigurationsregelwerk (28) mittels einer kraftfahrzeugexternen elektronischen Recheneinrichtung (12) des kraftfahrzeugexternen Aktualisierungssystems (10) erzeugt wird, wobei
in Abhängigkeit von einem Konfigurationsdatensatz (30) das Konfigurationsregelwerk (28) erzeugt wird, wobei der Konfigurationsdatensatz (28) in Abhängigkeit von einer Fahrzeugausrüstungsoptionsliste (32) und von einer technischen Merkmalszusammensetzung (34) für das Kraftfahrzeug (22) erzeugt wird.

2. Verfahren nach Anspruch 1, wobei
die Fahrzeugausrüstungsoptionsliste (32) in Abhängigkeit von einem Kundenauftrag (36) für die Konfiguration mittels des kraftfahrzeugexternen Aktualisierungssystems (10) erzeugt wird.

3. Verfahren nach Anspruch 1 oder 2, wobei
die technische Merkmalszusammensetzung (34) in Abhängigkeit von zumindest einem im Kraftfahrzeug (22) verbautem Bauteil (28) mittels des kraftfahrzeugexternen Aktualisierungssystems (10) erzeugt wird.

4. Verfahren nach einem der vorhergehenden Ansprüche, wobei
der Konfigurationsdatensatz (30) in Abhängigkeit von einer Identifizierung der elektronischen Recheneinrichtung (20) mittels einer Identifizierungseinrichtung (40) des kraftfahrzeugexternen Aktualisierungssystems (10) für die elektronische Recheneinrichtung (20) erzeugt wird.

5. Verfahren nach einem der vorhergehenden Ansprüche, wobei
das Konfigurationsregelwerk (28) in Abhängigkeit von der Fahrzeugausrüstungsoptionsliste (32) und in Abhängigkeit von der technischen Merkmalszusammensetzung (34) erzeugt wird.

6. Verfahren nach einem der vorhergehenden Ansprüche, wobei
bei der Erzeugung der Softwarekomponente (18) eine Veränderung in der technischen Merkmalszusammensetzung (34) im Kraftfahrzeug (22) berücksichtigt wird.

7. Verfahren nach einem der vorhergehenden Ansprüche, wobei
bei der Erzeugung der Softwarekomponente (18) eine Veränderung in der Fahrzeugausrüstungsoptionsliste (32) im Kraftfahrzeug (22) berücksichtigt wird.

8. Computerprogrammprodukt (14) mit Programmmitteln, welche in einem computerlesbaren Speichermedium (16) einer kraftfahrzeugexternen elektronischen Recheneinrichtung (12) abspeicherbar sind, und Befehle umfasst, wenn das Computerprogrammprodukt (14) mittels der kraftfahrzeugexternen elektronischen Recheneinrichtung (12) abgearbeitet wird, ein Verfahren nach einem der Ansprüche 1 bis 7 durchzuführen.

9. Computerlesbares Speichermedium (16) mit einem Computerprogrammprodukt (14) nach Anspruch 8.

10. Kraftfahrzeugexternes Aktualisierungssystem (10) mit zumindest einer kraftfahrzeugexternen elektronischen Recheneinrichtung (12), wobei das kraftfahrzeugexterne Aktualisierungssystem (10) zum Durchführen eines Verfahrens nach einem der Ansprüche 1 bis 7 ausgebildet ist.

## Claims

1. Method for generating a software component (18) for an electronic computing device (20) of a motor vehicle (22) by means of a motor-vehicle-external updating system (10), in which method the software component (18) is generated on the basis of a configuration write sequence (24), a configuration read sequence (26) and a configuration rule system (28) by means of a motor-vehicle-external electronic computing device (12) of the motor-vehicle-external updating system (10),
wherein the configuration rule system (28) is generated on the basis of a configuration data set (30), wherein the configuration data set (28) is generated on the basis of a vehicle equipment options list (32) and a technical feature composition (34) for the motor vehicle (22).

2. Method according to claim 1,
wherein the vehicle equipment options list (32) is generated by means of the motor-vehicle-external updating system (10) on the basis of a customer order (36) for the configuration.

3. Method according to claim 1 or claim 2,
wherein the technical feature composition (34) is generated by means of the motor-vehicle-external updating system (10) on the basis of at least one component (28) installed in the motor vehicle (22).

4. Method according to any of the preceding claims,
wherein the configuration data set (30) is generated for the electronic computing device (20) on the basis of an identification of the electronic computing device (20) by means of an identification device (40) of the motor-vehicle-external updating system (10).

5. Method according to any of the preceding claims,
wherein the configuration rule system (28) is generated on the basis of the vehicle equipment options list (32) and on the basis of the technical feature composition (34).

6. Method according to any of the preceding claims,
wherein a change in the technical feature composition (34) in the motor vehicle (22) is taken into account when generating the software component (18).

7. Method according to any of the preceding claims,
wherein a change in the vehicle equipment options list (32) in the motor vehicle (22) is taken into account when generating the software component (18).

8. Computer program product (14) which comprises program means that can be stored in a computer-readable storage medium (16) of a motor-vehicle-external electronic computing device (12), and comprises commands for carrying out a method according to any of claims 1 to 7 when the computer program product (14) is executed by means of the motor-vehicle-external electronic computing device (12).

9. Computer-readable storage medium (16) comprising a computer program product (14) according to claim 8.

10. Motor-vehicle-external updating system (10) comprising at least one motor-vehicle-external electronic computing device (12), wherein the motor-vehicle-external updating system (10) is designed to carry out a method according to any of claims 1 to 7.

## Revendications

1. Procédé pour la génération d'un composant logiciel (18) pour un dispositif de calcul (20) électronique d'un véhicule automobile (22) au moyen d'un système de mise à jour (10) externe au véhicule automobile, dans lequel le composant logiciel (18) est généré en fonction d'une séquence d'écriture de configuration (24), d'une séquence de lecture de configuration (26) et d'un ensemble de règles de configuration (28) au moyen d'un dispositif de calcul (12) électronique externe au véhicule automobile du système de mise à jour (10) externe au véhicule automobile,
l'ensemble de règles de configuration (28) étant généré en fonction d'un ensemble de données de configuration (30), l'ensemble de données de configuration (28) étant généré en fonction d'une liste d'options d'équipement de véhicule (32) et d'une composition de caractéristiques techniques (34) pour le véhicule automobile (22).

2. Procédé selon la revendication 1,
la liste d'options d'équipement de véhicule (32) étant générée en fonction d'une commande de client (36) pour une configuration au moyen du système de mise à jour (10) externe au véhicule.

3. Procédé selon la revendication 1 ou 2,
la composition de caractéristiques techniques (34) étant générée en fonction d'au moins un composant (28) installé dans le véhicule automobile (22) au moyen du système de mise à jour (10) externe au véhicule.

4. Procédé selon l'une des revendications précédentes,
l'ensemble de données de configuration (30) étant généré en fonction d'une identification du dispositif de calcul électronique (20) au moyen d'un dispositif d'identification (40) du système de mise à jour (10) externe au véhicule, pour le dispositif de calcul électronique (20).

5. Procédé selon l'une des revendications précédentes,
l'ensemble de règles de configuration (28) étant généré en fonction de la liste d'options d'équipement de véhicule (32) et en fonction de la composition de caractéristiques techniques (34).

6. Procédé selon l'une des revendications précédentes,
lors de la génération du composant logiciel (18), une modification dans la composition de caractéristiques techniques (34) dans le véhicule automobile (22) est prise en compte.

7. Procédé selon l'une des revendications précédentes,
lors de la génération du composant logiciel (18), une modification dans la liste d'options d'équipement de véhicule (32) dans le véhicule automobile (22) est prise en compte.

8. Produit de programme informatique (14) comprenant des moyens de programme, lesquels peuvent être enregistrés dans un support de stockage (16) lisible par ordinateur d'un dispositif de calcul électronique (12) externe au véhicule, et qui comprend des commandes, lorsque le produit de programme informatique (14) est exécuté au moyen du dispositif de calcul électronique (12) externe au véhicule, pour exécuter un procédé selon l'une des revendications 1 à 7.

9. Support de stockage (16) lisible par ordinateur comprenant un produit de programme informatique (14) selon la revendication 8.

10. Système de mise à jour (10) externe au véhicule comprenant au moins un dispositif de calcul électronique (12) externe au véhicule, le système de mise à jour (10) externe au véhicule étant conçu pour exécuter un procédé selon l'une des revendications 1 à 7.
